# EUROPÄISCHE PATENTSCHRIFT

(11) **EP 1 836 462 B1**
(45) Veröffentlichungstag und Bekanntmachung des Hinweises auf die Patenterteilung: **16.09.2015**
(21) Anmeldenummer: 05789516.1
(22) Anmeldetag: 20.09.2005
(51) Int. Cl.: G01J 1/04

(54) **SENSOREINRICHTUNG, INSBESONDERE FÜR EIN KRAFTFAHRZEUG**
SENSOR DEVICE, ESPECIALLY FOR A MOTOR VEHICLE
DISPOSITIF CAPTEUR, NOTAMMENT POUR UN VEHICULE AUTOMOBILE

(30) Priorität: 30.10.2004 DE 102004053029; 15.11.2004 DE 102004055060
(43) Veröffentlichungstag der Anmeldung: 26.09.2007
(73) Patentinhaber: ROBERT BOSCH GMBH, 70442 Stuttgart (DE)
(72) Erfinder: WOLF, Frank, 77815 Buehl (DE); PACK, Andreas, 77815 Buehl (DE)
(86) Internationale Anmeldenummer: PCT/EP2005/054700
(87) Internationale Veröffentlichungsnummer: WO 2006/048357

(56) Entgegenhaltungen:
- DE-A1- 10 034 555
- US-A- 5 726 441
- US-A1- 2003 001 074
- US-B1- 6 297 740

## Beschreibung

### Stand der Technik

Die Erfindung betrifft eine Sensoreinrichtung, insbesondere für ein Kraftfahrzeug, nach Gattung des unabhängigen Anspruchs.

Es sind schon zahlreiche Sensoreinrichtungen, insbesondere für Kraftfahrzeuge bekannt, die Lichtstrahlung, beispielsweise Sonnenstrahlung, im Kraftfahrzeug zu detektieren vermögen. Diese weisen einen Lichtleitkörper auf, durch den das Licht auf mehrere Sensorelemente geleitet wird. Diese Sensoreinrichtungen dienen dazu, die Beleuchtungseinrichtungen des Kraftfahrzeugs zu steuern, so dass die Beleuchtungseinrichtungen des Kraftfahrzeugs eingeschaltet werden, wenn das Fahrzeug in einen Tunnel einfährt oder die Helligkeit durch einsetzende Dämmerung abnimmt.

Weiterhin sind Sensoreinrichtungen bekannt, die die Richtung der Sonnenstrahlung detektieren um verschiedene andere Einrichtungen des Kraftfahrzeugs zu steuern. Diese Sensoreinrichtungen weisen Sensorarrays oder Vier-Quadranten-Photodioden auf, welche jedoch kostenintensiv sind und keine hinreichende Genauigkeit zu Detektion der Richtung aufweisen.

Aus der US 2003/0001074 A1 und der US 6,297,740 B2 sind Sensoreinrichtungen zur Erfassung einer Richtung einer Lichtstrahlung bekannt. Die Sensoreinrichtungen werden genutzt eine klimabeeinflussende Einrichtung, insbesondere eine Klimaanlage, in einem Kraftfahrzeug in Abhängigkeit der erfassten Richtung der einfallenden Lichtstrahlung auf das Kraftfahrzeug entsprechend anzusteuern.

Aus der DE 100 34 555 A1 ist eine lichtempfindliche Sensoreinheit zum automatischen Schalten von Beleuchtungseinrichtungen und für eine Regensensoreinrichtung bekannt. Dabei ist der Lichtleitkörper einstückig ausgebildet und an einer Windschutzscheibe des Kraftfahrzeuges angeordnet.

Es ist Aufgabe der Erfindung eine verbesserte Sensoreinrichtung mit einem vergrößerten Winkelbereich zum Erfassen einer Richtung einer Lichtstrahlung zur Ansteuerung einer klimabeeinflussenden Einrichtung bereitzustellen.

Dieses Aufgabe wird durch die erfindungsgemäßen Merkmale des neuen Anspruchs 1 gelöst. Weitere vorteilhafte Ausführungsformen sind in den abhängigen Ansprüchen angegeben.

### Vorteile der Erfindung

Die erfindungsgemäße Sensoreinrichtung mit den Merkmalen des Hauptanspruchs hat den Vorteil, dass durch Signale, die von den Empfängern abgegeben werden, eine klimabeeinflussende Einrichtung, bspw. eine Klimaanlage, in Abhängigkeit dieser Signale gesteuert werden kann. Hierzu ist ein Steuermittel vorgesehen, das die Signale auswertet und entsprechende Signale an die Klimaanlage vermittelt. Auf diese Weise wird eine einfache und kostengünstige Möglichkeit gegeben, für ein optimales Raumklima im Kraftfahrzeug zu sorgen. Dadurch dass die Richtung der einfallenden Sonnenstrahlung durch den Lichtleitkörper sehr genau detektiert werden kann, kann bei der Steuerung der Klimaanlage somit auf die Strahlungswärme der Sonnenstrahlung besondere Rücksicht genommen werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Empfänger der Sensoreinrichtung ein lichtempfindliches Element mit einem Fokussierungsmittel aufweisen, um die Richtung der einstrahlenden Sonnenstrahlung möglichst genau zu detektieren.

Ist das oder sind die Fokussierungsmittel einstückig mit dem Lichtleiter aufgebildet, kann die erfindungsgemäße Sensoreinrichtung besonders einfach und kostengünstig hergestellt werden.

Hierbei ist es von besonderem Vorteil, wenn das Fokussierungsmittel Filtereigenschaften, bspw. durch eine Einfärbung oder eine aufgebrachte Filterschicht aufweist, da so ein besonders genaues Steuerverhalten des Steuermittels erzielt werden kann.

In einer einfachen Ausführung weist das Fokussierungsmittel einen ersten zylindrischen Abschnitt und einen zweiten fokussierenden Abschnitt auf, wobei der fokussierende Abschnitt parabolisch ausgeführt werden kann. So kann auf einfache Weise eine sehr gute Fokussierung erzielt werden.

Hierbei ist es besonders vorteilhaft, wenn der zylindrische Abschnitt in Länge, Durchmesser und Brechungsindex so bemessen ist, dass die eintretende Lichtstrahlung unter Totalreflexion geführt ist, wodurch die Fokussierung und damit die Einstrahlrichtung noch besser detektiert wird.

Durch einen dritten Empfänger, der ein drittes Signal abzugeben vermag, und der identisch aufgebaut ist wie der erste und zweite Empfänger, kann die Strahlung aus verschiedensten Richtungen mit hoher Genauigkeit detektiert werden.

In einer einfachen Ausführung ermitteln die Steuermittel aus den Signalen der Empfänger die Richtung der Sonnenstrahlung.

Prinzipiell können erfindungsgemäß auch die Beleuchtungseinrichtungen des Kraftfahrzeugs durch die Steuermittel gesteuert werden. Vorteilhaft ist hierbei, wenn aus den Signalen der Empfänger ein Summensignal zur Integration der Gesamthelligkeit erzeugt wird. Dieses Summensignal kann auch mit einzelnen Signalen einzelner Empfänger in verschiedenster Gewichtung zur Steuerung der Beleuchtungseinrichtungen Berücksichtigung finden.

Besonders kostengünstig lässt sich die Sensoreinrichtung dadurch darstellen, indem der Lichtleitkörper der Sensoreinrichtung in einen Lichtleitkörper eines Regensensors integriert ist, insbesondere wenn die beiden Lichtleitkörper einstückig ausgebildet sind.

Eine zweckmäßige und einfache Weiterbildung wird dadurch erzielt, dass der Regensensor unter Berücksichtigung der Signale der Empfänger steuerbar ist.

### Zeichnungen

Ein Ausführungsbeispiel der Erfindung ist in den Zeichnungen dargestellt und in der nachfolgenden Beschreibung näher erläutert. Es zeigen:
Figur 1 eine schematische Darstellung einer erfindungsgemäßen Sensoreinrichtung,
Figur 2 einen Lichtleitkörper einer erfindungsgemäßen Sensoreinrichtung in perspektivischer Darstellung,
Figur 3 einen schematischen Querschnitt durch eine erfindungsgemäße Sensoreinrichtung, und
Figur 4 den Lichtleitkörper eines Regensensors mit einem integrierten Lichtleitkörper einer erfindungsgemäßen Sensoreinrichtung in perspektivischer Darstellung.

### Beschreibung des Ausführungsbeispiels

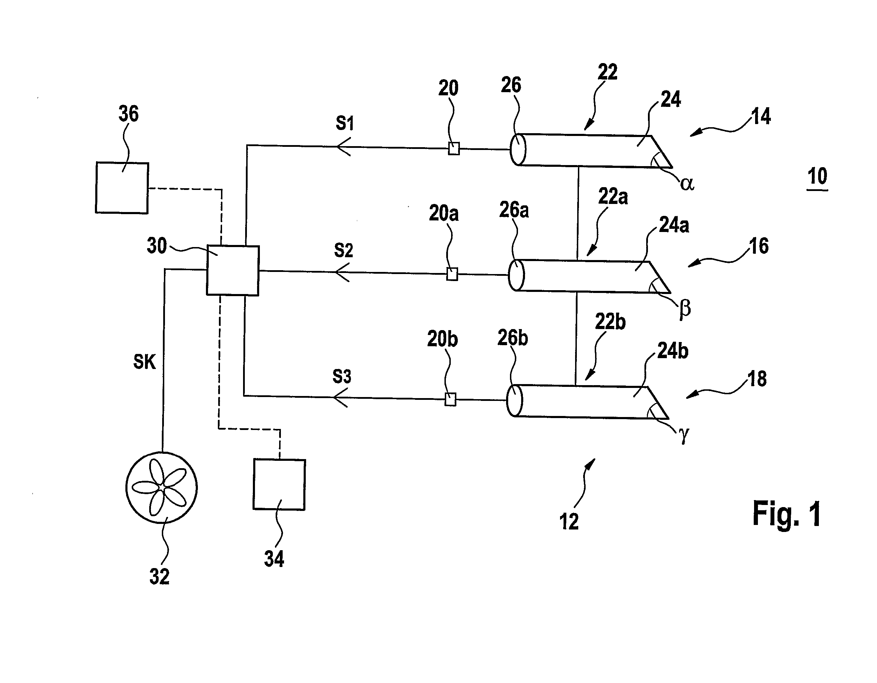

In Figur 1 ist eine erfindungsgemäße Sensoreinrichtung 10 in einer schematischen Darstellung gezeigt. Diese umfasst einen Lichtleitkörper 12, einen ersten Empfänger 14, einen zweiten Empfänger 16 und einen dritten Empfänger 18. Der Empfänger 14 weist ein lichtempfindliches Element 20 auf, das in der optischen Achse eines Fokussierungsmittels 22 angeordnet ist. Das Fokussierungsmittel 20 vermag Strahlung, die auf den Lichtleitkörper 12 aus zumindest einer vorbestimmten Richtung fällt, zumindest teilweise auf das Element 20 zu lenken und/oder zu fokussieren. Das lichtempfindliche Element 20 ist bspw. als CCD-Element oder als einfache Fotodiode, beispielsweise als Halbleiterbauelement, ausgebildet.

Das Fokussierungsmittel 22 weist im Wesentlichen zwei Abschnitte auf, und zwar einen ersten Abschnitt 24, der von im Wesentlichen zylindrischer Gestalt ist und einen zweiten, fokussierenden Abschnitt 26, der von parabolischer Form ist und im Wesentlichen das Fokussierungsmittel 22 bzw. den zylindrischen Abschnitt 24 zum lichtempfindlichen Element 20 hin bodenartig begrenzt. Der fokussierende Abschnitt 26 fokussiert die Strahlung linsenartig auf das Element 20. Der zylindrische Abschnitt 24 hingegen lenkt die aus einer vorbestimmten Richtung einfallende Strahlung innerhalb des Fokussierungsmittels 22. Durch die optischen Gesetze, insbesondere durch das der Totalreflexion, wird auch dadurch ein fokussierender Effekt erzielt.

Die optische Achse des fokussierenden Abschnitts 26, auf der sich auch das Element 20 befindet, verläuft im Wesentlichen parallel oder identisch zur Mittelachse des zylindrischen Abschnitts 24. Auf der dem parabolischen Abschnitt 26 abgewandten Seite ist der zylindrische Abschnitt 24 in einem Winkel α abgeschrägt. Hierdurch entsteht eine schräge Fläche, mit der der Empfänger 14 an einer Scheibe, insbesondere an einer Windschutzscheibe eines Kraftfahrzeugs optisch kontaktiert werden kann. An dieser Stelle kann bspw. zwischen dem Fokussierungsmittel 22 und der Scheibe auch ein Koppelmedium angeordnet sein, welches beispielsweise aus Kunststoff, insbesondere Silikon besteht, der zusätzlich auch klebende Eigenschaften oder Schichten aufweisen kann.

Da die abgeschrägte Fläche im Regelfall parallel zur Oberfläche der Scheibe verlaufen soll, wird die Schräge und damit der Winkel α derart gewählt, dass das Licht aus der Detektionsrichtung an der Scheibe gebrochen wird und im Inneren des zylindrischen Abschnitts 24 des Fokussierungsmittels 22 zum fokussierenden Abschnitts 26 geleitet wird, durch das die Strahlung auf das lichtempfindliche Element 20 fokussiert wird. Auf diese Weise kann die Richtung der auf das Fahrzeug einfallenden Strahlung bestimmt werden.

Der zweite Empfänger 16 und der dritte Empfänger 18 sind identisch ausgebildet wie der erste Empfänger 14. Aus diesem Grunde wurden für die Elemente des zweiten Empfängers 16 sowie für die Elemente des dritten Empfängers 18 die identischen Bezugszeichen wie die für den ersten Empfänger 14 verwendet, jedoch um ein a bzw. b ergänzt.

Die drei Fokussierungsmittel, 22, 22a, 22b sind zu einem gemeinsamen Lichtleitkörper 12 verbunden. Die einzelnen Fokussierungsmittel 22, 22a, 22b weisen jedoch in verschiedene Richtungen, um verschiedene Detektionsrichtungen darzustellen. Daher sind die Winkel α, β, γ der abgeschrägten Flächen auch nicht zwangsweise identisch, sondern werden vom Fachmann entsprechend der gewünschten Detektionsrichtung und dem Winkel der Fahrzeugscheibe zu einer Bezugsebene - beispielsweise der Horizontalen - gewählt. Die zylindrischen Abschnitte 24, 24a und 24b sind hierbei in Länge, Durchmesser und Brechungsindex derart bemessen, dass die durch die schräge Fläche eintretende Lichtstrahlung unter Totalreflexion zum fokussierenden Abschnitt 26 bzw. 26a oder 26b, geführt wird. Dieses Prinzip ist dem Fachmann von der Herstellung von Lichtleitfasern bestens bekannt. In einer Variation kann das Fokussierungsmittel 22 derart beschichtet oder inhomogen ausgebildet sein, daß die Änderung des Brechungsindex' den Erfordernissen entspricht, wie dies von gängigen Lichtleitfasern bekannt ist.

Der erste Empfänger 14, bzw. das Lichtleitelement 20 des ersten Empfängers 14 vermag ein Signal S1 an eine Verarbeitungseinrichtung als Steuermittel 30 abzugeben, das als Mikroprozessor ausgebildet ist. Ebenso vermag der zweite Empfänger 16 bzw. das lichtempfindliche Element 20a des zweiten Empfängers 16 ein Signal S2 an die Verarbeitungseinheit 30 abzugeben. Mutatis mutandis gibt auch der dritte Empfänger 18 ein Signal S3 an die Verarbeitungseinrichtung 30 ab. Aus einem oder mehreren der Signale S1, S2, S3 generiert die Verarbeitungseinrichtung 30 ein Steuersignal SK, welches eine klimabeeinflussende Einrichtung 32, beispielsweise eine Klimaanlage oder Lüftung eines Kraftfahrzeugs steuert. Aus einem oder mehreren der Signale S1, S2, S3 vermag die Verarbeitungseinrichtung 30 die Richtung der auf das Fahrzeug strahlenden Sonnenstrahlung zu ermitteln und in Abhängigkeit dieser auch Beleuchtungseinrichtungen 34 oder auch weitere, andere Vorrichtungen 36 zu steuern. Als weitere Vorrichtungen kommen hier beispielsweise Scheibenrollos bzw. LCD-Verdunklungen für Fahrzeugscheiben, Lüftungen, Umluftklappen, -schalter, Spiegel oder Heizeinrichtungen in Betracht. Diese Aufzählung ist jedoch keineswegs abschließend.

Die Verarbeitungseinrichtung 30 kann darüber hinaus auch zur Steuerung der Scheibenwischer des Kraftfahrzeugs herangezogen werden. Dies ist insbesondere dann vorteilhaft, wenn der Lichtleitkörper 12 der Sensoreinrichtung 10 in einen Lichtleitkörper eines Regensensors integriert ist, der neben den Signalen S1 und S2 der Sensoreinrichtung 10 auch Signale über die Regenintensität liefert. In Fahrsituationen bei denen trotz Sonnenschein auf der Windschutzscheibe trotzdem Regen fällt, dampfen bzw. Schlieren wesentlich schneller von der Windschutzscheibe ab, so dass das Wischverhalten in Abhängigkeit der Signale S1, S2 und/oder S3 verändert werden kann.

Die Verarbeitungseinrichtung 30 wertet hierbei nicht nur die Einzelsignale S1, S2 und/oder S3 aus, sondern vermag diese Signale auch zu vergleichen und verschiedene Verhältnisse der einzelnen Signale S1/S2/S3 untereinander zu ermitteln. Erhöht sich die Intensität des Umgebungslichts bei gleichbleibender Richtung, ändern sich die Beträge der Signale S1, S2, S3, jedoch bleiben die Verhältnisse untereinander konstant. Ändert sich die Einfallsrichtung des Lichtes bei gleichbleibender Intensität, variieren die Signalverhältnisse zwischen S1 und S2 bzw. S2 und S3 usw., woraus Rückschlüsse über die Einfallsrichtung der Sonnenstrahlung gezogen werden können. Durch Addition aller Signale S1, S2, S3 kann auf die Gesamthelligkeit in der Umgebung des Kraftfahrzeugs geschlossen werden.

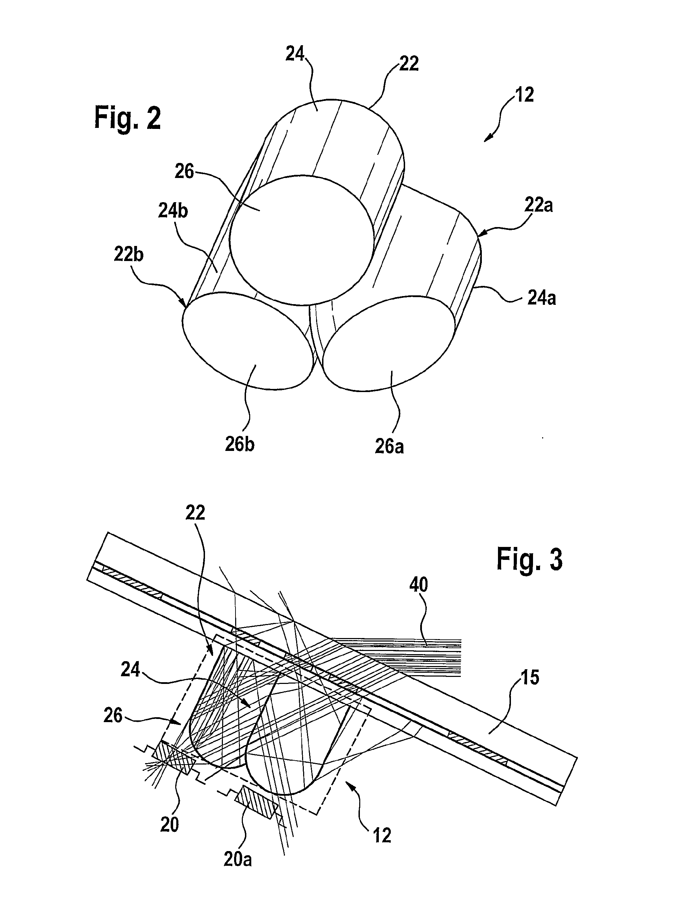

In Fig. 2 ist ein Lichtleitkörper 12 einer erfindungsgemäßen Sensoreinrichtung 10 in perspektivischer Darstellung gezeigt. Die drei Fokussierungsmittel 22, 22a, 22b sind hier parallel zueinander angeordnet und jeweils durch die fokussierenden Abschnitte 26, 26a, 26b abgeschlossen. Diese sind mit ihrem parabolischen Abschnitt derart ausgeformt, dass sie Licht aus verschiedenen Raumrichtungen, welches von der den fokussierenden Abschnitten 26, 26a, 26b abgewandten Seite der Fokussierungsmittel 22, 22a, 22b einfällt, empfangen. An dieser den Fokussierungsmitteln 26, 26a, 26b abgewandten Seite ist der Lichtleitkörper 12 auf der Scheibe 15 (Fig. 3) befestigt. Die optischen Achsen der fokussierenden Abschnitte beschreiben in diesem Ausführungsbeispiel einen Winkel zu den jeweiligen Mittelachsen der zylindrischen Abschnitte 24, 24a, 24b, so dass trotz paralleler Anordnung der zylindrischen Abschnitte 24, 24a, 24b das Licht aus verschiedenen, definierten Raumrichtungen detektiert werden kann.

In Figur 3 ist ein Schnitt durch eine Windschutzscheibe eines Kraftfahrzeugs mit einem erfindungsgemäßen Sensor in schematischer Darstellung gezeigt. In der Folgenden Beschreibung wird jeweils nur der erste Empfänger 14 beschrieben, für die anderen Empfänger gilt mutatis mutantis dasselbe. Der Lichtleitkörper 12 ist auf die Scheibe 15 des Kraftfahrzeugs aufgesetzt, und somit im Inneren des Kraftfahrzeugs befestigt. Die Lichtstrahlung, hier mit dem Bezugszeichen 40 versehen, aus der gewünschten Detektionsrichtung trifft auf die äußere Oberfläche der Scheibe 15. An dieser wird die Lichtstrahlung gebrochen und gelangt, im Wesentlichen ähnliche Brechungsindizes zwischen Scheibe 15 und Lichtleitkörper 12 vorausgesetzt, in den zylindrischen Abschnitt 24 des Fokussierungsmittels 22. In diesem zylindrischen Abschnitt wird die Strahlung 40 in Richtung des fokussierenden Abschnitts 26 geführt und durch diesen auf das lichtempfindliche Element 20 fokussiert. Die Anordnung und Ausbildung des zylindrischen Abschnitts 24, des fokussierenden Abschnitts 26 und des lichtempfindlichen Elements 20 ist hierbei entsprechend den Gesetzen der Optik derart gewählt, dass lediglich Licht aus der gewünschten Einstrahlrichtung, mit dem gewünschten Öffnungskegel vom lichtempfindlichen Element 20 detektiert wird. Das aus anderen, nicht gewünschten Richtungen einfallende Licht wird entweder total zurückreflektiert oder am lichtempfindlichen Element 20 vorbei geleitet.

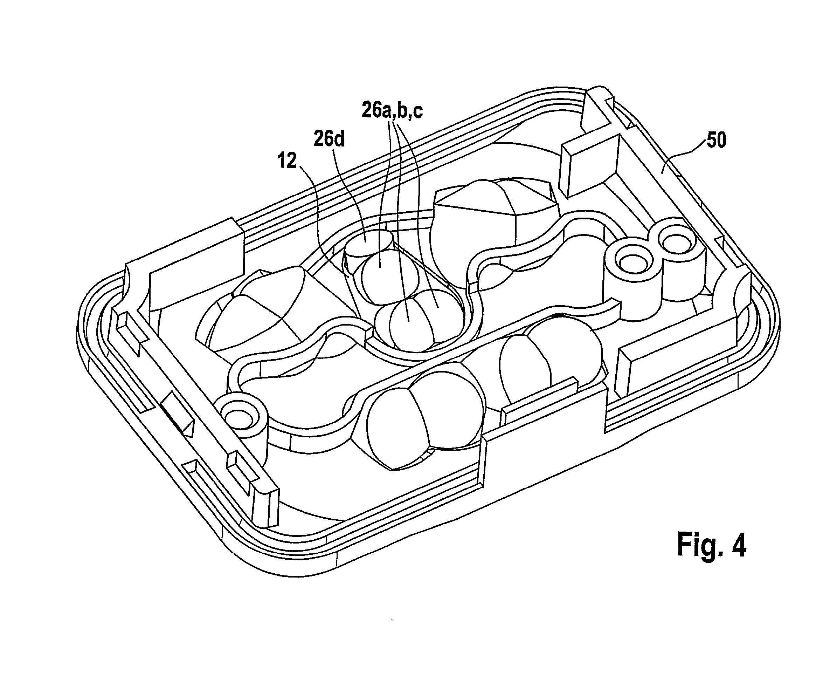

In Figur 4 ist ein Lichtleitkörper eines Regensensor gezeigt, in den der Lichtleitkörper einer erfindungsgemäßen Sensoreinrichtung integriert ist. Der Lichtleitkörper 50 des Regensensors ist aus Kunststoff in einem Spritzgussverfahren hergestellt. Der Lichtleitkörper 12 der Sensoreinrichtung 10 ist in den Leichtleitkörper 50 des Regensensors integriert und in einem mehrkomponentigen Spritzgussverfahren in den Lichtleitkörper 50 des Regensensors eingespritzt. In einer Variation kann natürlich auch ein einkomponentiges Spritzgussverfahren verwendet werden und damit die beiden Lichtleitkörper 50, 12 aus dem gleichen Material mit gleicher Farbgebung bestehen. Alternativ kann der Lichtleitkörper 50 des Regensensors natürlich auch mit einer entsprechenden Aussparung versehen sein, in die der Lichtleitkörper 12 der Sensoreinrichtung 10 eingesetzt ist. Der hier gezeigte Lichtleitkörper 12 der erfindungsgemäßen Sensoreinrichtung 10 ist hier mit vier Empfängern und damit mit vier fokussierenden Abschnitten 26a, 26b, 26c, 26d versehen, womit ein noch größerer Bereich in verschiedensten Richtungen detektiert werden kann. In einer Variation kann auch ein einziges lichtempfindliches Element 20 mit mehreren Fokussierungsmitteln, bspw. 26a und 26b verwendet werden.

Der Lichtleitkörper 12 ist üblicherweise aus Kunststoff in einem einkomponentigen Spritzgussverfahren hergestellt. Jedoch können auch mehrkomponentige Spritzgussverfahren zur Anwendung kommen. Prinzipiell kann jedes Fokussierungsmittel 26, 26a usw. mit verschiedenen Filtereigenschaften versehen werden, die durch ein generelles Einfärben des Fokussierungsmittels 22, 22a oder durch eine entsprechende Oberflächenbeschichtung erzielt werden kann. Weiters ist es auch möglich zwischen dem fokussierenden Abschnitt 26 und dem lichtempfindlichen Element 20 ein Filter vorzusehen. In einer weiteren Variation können auch entsprechend filternde lichtempfindliche Elemente 20 verwendet werden, die entweder von vornherein auf nur einen bestimmten Strahlenbereich sensibilisiert sind oder mit entsprechenden Beschichtungen versehen sind. In einer weiteren Variation ist es möglich, die der Scheibe 15 zugewandte Seite des Fokussierungsmittels 22 mit einer dünnen dunklen Schicht zu versehen, sodass das Lichtleitelement 12 von außen nicht erkennbar ist und im Bereich eines farbigen Keils an der Windschutzscheibe 15 angeordnet werden kann und damit nur wenig auffällig ist.

## Patentansprüche

1. Sensoreinrichtung (10), für ein Kraftfahrzeug, mit einem Lichtleitkörper (12), zumindest einem ersten Empfänger (14) und einem zweiten Empfänger (16), die durch den Lichtleitkörper (12) strahlende Lichtstrahlung, insbesondere Sonnenstrahlung, zu detektieren vermögen, wobei der erste Empfänger (14) ein erstes Signal (S1) und der zweite Empfänger (16) ein zweites Signal (S2) abzugeben vermag und ein Steuermittel (30) vorgesehen ist, das eine klimabeeinflussende Einrichtung (32) in Abhängigkeit der Signale (S1, S2) zu steuern vermag, wobei der erste und zweite Empfänger (14, 16) mindestens ein lichtempfindliches Element (20, 20a) umfasst, wobei der Lichtleitkörper (12) zum ersten und zweiten Empfänger (14, 16) korrespondierende Fokussierungsmittel (22) aufweist, wobei die Fokussierungsmittel (22) einstückig mit dem Lichtleitkörper (12) ausgebildet sind, wobei die Fokussierungsmittel (22) einen fokussierenden Abschnitt (26) aufweisen , und wobei der fokussierende Abschnitt (26) dem lichtempfindlichen Element (22) zugewandt ist, **dadurch gekennzeichnet, dass** die Fokussierungsmittel (22) ferner einen zylindrischen Abschnitt (24) aufweisen, der auf einer Scheibe (15) des Kraftfahrzeugs anordenbar ist, wobei der zylindrische Abschnitt (24) in Länge, Durchmesser und Brechungsindex derart bemessen ist, dass die durch die Scheibe (15) des Kraftfahrzeugs eintretende Lichtstrahlung unter Totalreflexion geführt ist.

2. Sensoreinrichtung (10) nach Anspruch 1, **dadurch gekennzeichnet, dass** der fokussierende Abschnitt (26) des Fokussierungsmittels (22) parabolisch ausgeführt ist.

3. Sensoreinrichtung (10) nach Anspruch 1 oder 2, **dadurch gekennzeichnet, dass** das Fokussierungsmittel (22) Filtereigenschaften aufweist, insbesondere eingefärbt ist.

4. Sensoreinrichtung (10) nach einem der vorhergehenden Ansprüche, **dadurch gekennzeichnet, dass** ein dritter Empfänger (18) vorgesehen ist, der ein drittes Sig nal (S3) abzugeben vermag, wobei alle Empfänger (14, 16, 18) in ihrem Aufbau identisch sind aber in verschiedene Richtungen weisen.

5. Sensoreinrichtung (10) nach einem der vorhergehenden Ansprüche, **dadurch gekennzeichnet, dass** das Steuermittel (30) aus den Signalen die Richtung der Sonnenstrahlung zu ermitteln vermag.

6. Sensoreinrichtung (10) nach einem der vorhergehenden Ansprüche, **dadurch gekennzeichnet, dass** weitere Vorrichtungen, insbesondere Beleuchtungseinrichtungen (34), des Kraftfahrzeugs, steuerbar sind.

7. Sensoreinrichtung (10) nach einem der vorhergehenden Ansprüche, **dadurch gekennzeichnet, dass** der Lichtleitkörper (12) in einen Lichtleitkörper eines Regensensors (50) integriert ist, insbesondere einstückig mit diesem ausgebildet ist.

8. Sensoreinrichtung (10) nach Anspruch 7, **dadurch gekennzeichnet, dass** der Regensensor unter Berücksichtigung der Signale (S1, S2, S3) steuerbar ist.

## Claims

1. Sensor device (10), for a motor vehicle, comprising a light guiding body (12), at least one first receiver (14) and a second receiver (16), which can detect light radiation, in particular solar radiation, radiating through the light guiding body (12), wherein the first receiver (14) can emit a first signal (S1) and the second receiver (16) can emit a second signal (S2) and a control means (30) is provided, which can control a climate-influencing device (32) in a manner dependent on the signals (S1, S2), wherein the first and second receivers (14, 16) comprise at least one light-sensitive element (20, 20a) wherein the light guiding body (12) has focussing means (22) corresponding to the first and second receivers (14, 16), wherein the focussing means (22) are formed integrally with the light guiding body (12), wherein the focussing means (22) have a focussing section (26), and wherein the focussing section (26) faces the light-sensitive element (22), **characterized in that** the focussing means (22) furthermore have a cylindrical section (24), which is arrangeable on a pane (15) of the motor vehicle, wherein the cylindrical section (24) is dimensioned in terms of length, diameter and refractive index in such a way that the light radiation entering through the pane (15) of the motor vehicle is guided under total internal reflection.

2. Sensor device (10) according to Claim 1, **characterized in that** the focussing section (26) of the focussing means (22) is embodied in a parabolic fashion.

3. Sensor device (10) according to Claim 1 or 2, **characterized in that** the focussing means (22) has filter properties, in particular is coloured.

4. Sensor device (10) according to any of the preceding claims, **characterized in that** a third receiver (18) is provided, which can emit a third signal (S3), wherein all the receivers (14, 16, 18) are identical in terms of their construction but point in different directions.

5. Sensor device (10) according to any of the preceding claims, **characterized in that** the control means (30) can determine the direction of the solar radiation from the signals.

6. Sensor device (10) according to any of the preceding claims, **characterized in that** further apparatuses, in particular lighting devices (34), of the motor vehicle, are controllable.

7. Sensor device (10) according to any of the preceding claims, **characterized in that** the light guiding body (12) is integrated into a light guiding body of a rain sensor (50), in particular is formed integrally therewith.

8. Sensor device (10) according to Claim 7, **characterized in that** the rain sensor is controllable taking account of the signals (S1, S2, S3).

## Revendications

1. Dispositif de capteur (10) pour un véhicule automobile, comportant un guide de lumière (12), au moins un premier récepteur (14) et un deuxième récepteur (16), permet de détecter le rayonnement lumineux rayonnant à travers le guide de lumière (12), notamment le rayonnement solaire, dans lequel le premier récepteur (14) est capable d'émettre un premier signal (S1) et le deuxième récepteur (16) est capable d'émettre un deuxième signal (S2), et un moyen de commande (30) est prévu, qui est capable de commander un dispositif influant sur le climat (32) en fonction des signaux (S1, S2), dans lequel le premier et le deuxième récepteur (14, 16) comprennent au moins un élément sensible à la lumière (20, 20a), dans lequel le guide de lumière (12) présente des moyens de focalisation (22) correspondants au premier et au deuxième récepteur (14, 16), dans lequel les moyens de focalisation (22) sont réalisés en un seul tenant avec le guide de lumière (12), dans lequel les moyens de focalisation (22) présentent une portion focalisante (26) et dans lequel la portion focalisante (26) est tournée vers l'élément sensible à la lumière (22), **caractérisé en ce que** les moyens de focalisation (22) présente en outre une portion cylindrique (24)), qui peut être disposée sur une vitre (15) du véhicule mobile, dans lequel la portion cylindrique (24) est dimensionné en ce qui concerne sa longueur, son diamètre et son indice de réfraction de telle sorte que le rayonnement lumineux entrant à travers la vitre (15) du véhicule est guidé sous une réflexion totale.

2. Dispositif de capteur (10) selon la revendication 1, **caractérisé en ce que** la portion focalisante (26) du moyen de focalisation (22) est conçue de manière parabolique.

3. Dispositif de capteur (10) selon la revendication 1 ou 2, **caractérisé en ce que** le moyen de focalisation (22) présente des propriétés de filtre, notamment est coloré.

4. Dispositif de capteur (10) selon une des revendications précédentes, **caractérisée en ce que** un troisième récepteur (18) est prévu, qui est capable d'émettre un troisième signal (S3), dans lequel tous les récepteurs (14, 16, 18) sont identiques dans leur conception mais sont dirigés dans des directions différentes.

5. Dispositif de capteur (10) selon une des revendications précédentes, **caractérisé en ce que** le moyen de commande (30) est capable de déterminer d'après les signaux la direction du rayonnement solaire.

6. Dispositif de capteur (10) selon une des revendications précédentes, **caractérisé en ce que** des dispositifs supplémentaires, notamment des dispositifs d'éclairage (34) du véhicule automobile, peuvent être commandés.

7. Dispositif de capteur (10) selon une des revendications précédentes, **caractérisé en ce que** le guide de lumière (12) est intégré dans un guide de lumière d'un capteur de pluie (50), notamment est réalisé en un seul tenant avec celui-ci.

8. Dispositif de capteur (10) selon la revendication 7, **caractérisé en ce que** le capteur de pluie peut être commandé en tenant compte des signaux (S1, S2, S3).
